# EUROPÄISCHE PATENTSCHRIFT

(11) **EP 1 397 853 B1**
(45) Veröffentlichungstag und Bekanntmachung des Hinweises auf die Patenterteilung: **05.10.2005**
(21) Anmeldenummer: 02745264.8
(22) Anmeldetag: 25.04.2002
(51) Int. Cl.: H02K 5/15

(54) **RELAISTRÄGERVORRICHTUNG FÜR EINEN ELEKTROMOTOR, INSBESONDERE FÜR EINEN ELEKTRONISCH KOMMUTIERTEN GLEICHSTROMMOTOR**
RELAY SUPPORT DEVICE FOR AN ELECTRIC MOTOR, IN PARTICULAR FOR AN ELECTRICALLY COMMUTATED DC MOTOR
DISPOSITIF DE SUPPORT DE RELAIS CON U POUR UN MOTEUR ELECTRIQUE, EN PARTICULIER POUR UN MOTEUR A COURANT CONTINU A COMMUTATION ELECTRONIQUE

(30) Priorität: 22.06.2001 DE 10130118
(43) Veröffentlichungstag der Anmeldung: 17.03.2004
(73) Patentinhaber: Minebea Co. Ltd., Nagano-ken (JP)
(72) Erfinder: GANTER, Helmut, 78073 Bad Dürrheim (DE); HEIZMANN, Joachim, 78194 Immendingen (DE); KUWERT, Oswald, 79336 Tutschfelden (DE); WYSK, Hans-Joachim, 78048 Villingen-Schwenningen (DE)
(74) Vertreter: Liesegang, Eva
(86) Internationale Anmeldenummer: PCT/EP2002/004606
(87) Internationale Veröffentlichungsnummer: WO 2003/001646

(56) Entgegenhaltungen:
- US-A- 2 777 963
- US-A- 4 205 246
- US-A- 4 695 735
- US-A- 5 127 440
- US-A- 5 821 663

## Beschreibung

Die Erfindung betrifft eine Trägervorrichtung für einen Elektromotor, insbesondere für einen elektronisch kommutierten Gleichstrommotor, zur Anordnung einer Mehrzahl von Relais an einer Stirnseite des Elektromotors, an der Wicklungsanschlüsse und Signalleitungen des Elektromotors vorgesehen sind. Die Relais dienen insbesondere zum Schalten und Unterbrechen der Motorstromleitungen, d.h. der Versorgungsleitungen für die Statorwicklungen des Elektromotors. Die Erfindung ist auch anwendbar auf jede andere Art von elektronischen Motoren und Generatoren, welche Relais für das Schalten und Unterbrechen von Stromleitungen verwenden.

Die Erfindung betrifft im allgemeinen bürstenlose Gleichstrommotoren oder elektronisch kommutierte Gleichstrommotoren, die z.B. im Automobilbereich für Lenksysteme und andere Anwendungen, z.B. Lüfter, Klimaanlagen, Kühler etc. eingesetzt werden. Da der Gleichstrommotor in der Nähe des Verbrennungsmotors des KfZ eingesetzt wird, muß er beständig gegen extreme Temperaturen, Feuchtigkeit, Schmutz und andere Umwelteinflüssen sein. Von den Automobilherstellern werden ferner in der Regel ein niedriger ohmscher WicklungsWiderstand des Gesamtmotors und enge Widerstandstoleranzen sowie eine geringe Induktivität der Gesamtanordnung gefordert. Gleichstrommotoren für solche Anwendungen müssen somit robust sein und enge Fertigungstoleranzen einhalten.

Elektronisch kommutierte Gleichstrommotoren umfassen im allgemeinen einen Permanentmagneten, der auf einer Rotorwelle aufgebracht ist und in Umfangsrichtung mehrere wechselnde magnetische Pole aufweist, sowie einen Stator, der mehrere Antriebswicklungen aufweist, die mit den magnetischen Polen des Rotors in Wechselwirkung stehen. Der Gleichstrommotor ist von einem Gehäuse umschlossen, das mit einem Montageflansch zur Befestigung des Motors verbunden ist. An der Stirnseite des Gleichstrommotors, an der sich der Wickelkopf und die elektronischen Anschlüsse für die Versorgung und Ansteuerung des Motors befinden, ist das Gehäuse beispielsweise durch eine Verschlußkappe abgeschlossen. Bei einem Gleichstrommotor des Standes der Technik werden die Wicklungsenden der Statorwicklungen in der Regel auf dem Wickelkopf des Stators geführt und gebündelt über einen Kabelausgang von dem Stator weg zu einer Ansteuerelektronik geführt. Die Wicklungsenden der Statorwicklungen des Elektromotors sind normalerweise über Relais mit Versorgungsleitungen verbunden, um diese zu schalten und zu unterbrechen. Diese Relais liegen üblicherweise auf einer eigenen Schaltelektronik-Hauptplatine innerhalb oder außerhalb des Motorgehäuses.

Darüber hinaus weist ein elektronisch kommutierter Gleichstrommotor regelmäßig eine Sensorplatine mit zugehörigen Sensorbaugruppen zur Erfassung der Drehzahl, Drehlage etc. des Elektromotors auf.

US-A-4,695,735 beschreibt eine Relaisträgervorrichtung für einen Elektromotor zur Anordnung eines Relais an einer Stirnseite des Motors, an welcher Anschlüsse zur Bestromung der Relaiswicklung vorgesehen sind, mit einem Trägerbauteil, das sich über die Stirnseite des Elektromotors erstreckt und eine Kammer zum Aufnehmen des Relais aufweist, und mit einem Anschlußbauteil, das in das Trägerbauteil integriert ist. Ähnliche Relaisträgervorrichtungen sind in der US-A-2,777,963 und der US-A-4,205,246 gezeigt. Eine Trägervorrichtung für hydraulische Magnetventile ist in der US-A-5,127,440 beschrieben.

Bei den bekannten Elektromotoren besteht das Problem, daß die Positionierung und Montage der Hauptplatine für die Schaltelektronik und der Sensorplatine in richtiger Lage zum Stator des Elektromotors kritisch und arbeitsaufwendig sind.

Der Erfindung liegt die Aufgabe zugrunde, eine neue Bauweise für einen Elektromotor oder einen Generator mit Relais zum Schalten und Unterbrechen von Stromleitungen anzugeben, der eine einfache Montage, insbesondere eine präzise Positionierung und Justierung der Schaltbauteile ermöglicht. Durch die Erfindung soll ein Elektromotor mit einem kompakten Aufbau insbesondere der sicherheitsrelevanten Schaltbauteile für die Ansteuerung und Versorgung der Statorwicklungen sowie der Sensorelektronik zur Erfassung von Drehzahl und Drehlage des Motors geschaffen werden.

Diese Aufgabe wird durch eine Trägervorrichtung für einen Elektromotor mit den Merkmalen von Anspruch 1 sowie durch einen Elektromotor gemäß Anspruch 16 gelöst.

Die Erfindung sieht in Anspruch 1 eine Trägervorrichtung für einen Elektromotor zur Anordnung einer Mehrzahl von Relais an einer Stirnseite des Elektromotors, an der Wicklungsanschlüsse und Signalleitungen des Elektromotors vorgesehen sind, vor. Die Trägervorrichtung umfaßt ein Trägerbauteil, das so gestaltet ist, daß es sich über die Stirnseite des Elektromotors erstreckt und wenigstens eine, vorzugsweise mehrere Kammern zum Aufnehmen und Positionieren der Relais aufweist. In das Trägerbauteil ist ein Anschlußbauteil, insbesondere ein Stanzgitter zum elektrischen Anschließen der Wicklungsanschlüsse und der Relais integriert. Mit dem Trägerbauteil ist eine Sensorplatine verbunden ist, an welche die Signalleitungen des Elektromotors anschließbar sind. Diese Sensorplatine kann beispielsweise Hall-Sensoren oder Meßspulen für die Erfassung der Drehzahl und Drehlage des Rotors aufweisen, wobei die von den Sensoren erzeugten drehzahl- und drehlageabhängigen Signale über die Signalleitungen aus dem Motor herausgeführt werden.

Die erfindungsgemäße Trägervorrichtung kann mit den für die Ansteuerung des Elektromotors notwendigen Relais und dem Stanzgitter vormontiert werden, wobei die Relais in den Kammern mit der richtigen Ausrichtung vor-positioniert werden. Die Relais und das Stanzgitter werden durch das Trägerbauteil automatisch richtig zueinander ausgerichtet und können in einem automatisierten Montageverfahren, beispielsweise durch Schwallbad- oder Reflowlöten miteinander verbunden werden. Die gesamte Baugruppe kann über das Stanzgitter an die Wicklungsenden der Statorwicklungen angeschlossen werden.

Das Trägerbauteil der erfindungsgemäßen Trägervorrichtung ist vorzugsweise aus einem hochtemperaturfesten Kunststoff und insbesondere als Spritzgußteil hergestellt, wobei das Stanzgitter in den Kunststoff derart eingebettet sein kann, so daß er in dem Trägerbauteil gehalten ist. Das Stanzgitter ist vorzugsweise aus Blech und insbesondere in Form eines Stanz-Biegeteils hergestellt. Diese Merkmale tragen insbesondere dazu bei, daß die Relaisträgervorrichtung kostengünstig herzustellen ist, weil sie vollautomatisch gespritzt und montiert werden kann. Die Herstellung der stromführenden Leiterbahnabschnitte in Form eines Stanzgitters hat den weiteren Vorteil, daß dadurch sichergestellt ist, daß ausreichend hohe Lastströme, bis zu 100 Ampere und mehr verarbeitet werden können. Dadurch ergibt sich eine äußerst robuste, kompakte und kostengünstig herzustellende Baugruppe, die einschließlich der Relais automatisch vormontiert und insgesamt mit dem Elektromotor und insbesondere den Wicklungsenden der Statorwicklungen verbunden werden kann.

Vorzugsweise ist das Stanzgitter an einer von dem Elektromotor abgewandten Außenseite des Trägerbauteils und die Sensorplatine an einer dem Stanzgitter gegenüberliegenden Innenseite des Trägerbauteils angeordnet. Besonders bevorzugt ist die Sensorplatine mit dem Trägerbauteil vergossen, wobei vorgesehen sein kann, daß das Trägerbauteil einen dicht abgeschlossenen Raum zur Aufnahme der Sensorplatine definiert. Das Vergießen dient zur Stabilisierung sowie zur Fixierung sämtlicher Komponenten und als Schutz gegen das Eindringen störender Partikel.

Hierdurch ergibt sich der weitere Vorteil, daß in ein und derselben vormontierbaren Baugruppe sowohl die Relais und die Relais-Anschlußleitungen in lead frame-Technik (Stanzgitter) als auch die Sensorplatine mit den darauf vorgesehenen Sensorbaugruppen integriert werden können. Die Erfindung schafft eine neuartige Integration der mit Schwachstrom (< 1 Ampere) betriebenen Motorlogik und -sensorik und der Starkstrom (im Bereich von bis zu 100 Ampere) führenden Schaltbauteile. Dadurch wird die Montage des Elektromotors mit der erfindungsgemäßen Trägervorrichtung weiter vereinfacht. Neben den Relais und ihren Anschlußleitungen kann auch die gesamte Sensorik in dem Trägerbauteil vor-positioniert und justiert werden, so daß bei der Montage des Elektromotors nur noch die Trägervorrichtung mit den Relais, dem Stanzgitter und der Sensorplatine darin relativ zu dem Stator des Motors positioniert und angebracht werden muß.

Dies wird erfindungsgemäß dadurch erreicht, daß das Trägerbauteil an der Stirnseite des Elektromotors dreh- und damit justierbar angeordnet werden kann. Vorzugsweise weist das Trägerbauteil hierzu von seinem Umfang abstehende Laschen zur Befestigung an der Stirnseite des Elektromotors auf. Die Laschen können beispielsweise mit Langlöchern ausgebildet sein, so daß das Trägerbauteil auf die Stirnseite des Elektromotors aufgesetzt und zur Feinjustierung in einem begrenzten Winkel verdreht werden kann.

In dem Trägerbauteil sind, wie bereits erwähnt, vorzugsweise Relais vormontiert. Diese können ebenso wie die Sensorplatine mit dem Trägerbauteil vergossen sein. Durch das Vergießen der einzelnen Komponenten in dem Trägerbauteil sowie durch das Vorsehen eines dicht abgeschlossenen Raums zur Aufnahme der Sensorplatine in dem Trägerbauteil wird sichergestellt, daß die einzelnen Komponenten in der Trägervorrichtung gegen das Eindringen von Fremdkörpern, Feuchtigkeit oder dergleichen geschützt und vibrationsfest aufgenommen sind.

Die präzise Positionierung der Schaltrelais und des Stanzgitters relativ zu den Wicklungsanschlüssen der Statorwicklungen ist wichtig, um die Wicklungsenden der Statorwicklungen in gewünschter Lage und mit geringen Widerstandstoleranzen an die Relais anschließen zu können. Die Sensorplatine mit den zugehörigen Sensorbaugruppen, wie Hall-Elemente, Meßspulen oder dergleichen, muß relativ zu dem Stator und dem Rotor des Elektromotors präzise positioniert und justiert werden, um Drehzahl und Drehlage des Motors richtig bestimmen zu können. Die Integration der Sensorplatine in das Trägerbauteil macht dies problemlos möglich.

Bei einer bevorzugten Realisierung der erfindungsgemäßen Trägervorrichtung weist das Trägerbauteil zwei bis neun Kammern und insbesondere drei oder sechs Kammern zum Aufnehmen von Relais zur Ansteuerung eines dreiphasigen Elektromotors auf. Um das Stanzgitter lagerichtig in das Trägerbauteil zu integrieren, weist dieses vorzugsweise Vertiefungen zur Positionierung und seitlichen Isolierung des Stanzgitters auf.

Die Erfindung ist im folgenden anhand bevorzugter Ausführungsformen mit Bezug auf die Zeichnungen näher erläutert. In den Figuren zeigen:
- Fig. 1: eine Schnittdarstellung durch einen Elektromotor mit einer Relaisträgervorrichtung gemäß der Erfindung;
- Fig. 2: eine Schnittdarstellung der Relaisträgervorrichtung gemäß einer Ausführungsform der Erfindung, die in den Elektromotor der Fig. 1 eingesetzt wird;
- Fig. 3: eine Draufsicht auf die Relaisträgervorrichtung gemäß der Erfindung;
- Fig. 4: eine Draufsicht auf ein Stanzgitter für eine Relaisträgervorrichtung gemäß der Erfindung; und
- Fig. 5: eine Draufsicht auf die Relaisträgervorrichtung gemäß der Erfindung, in welche das Stanzgitter und die Sensorplatine eingebaut sind.

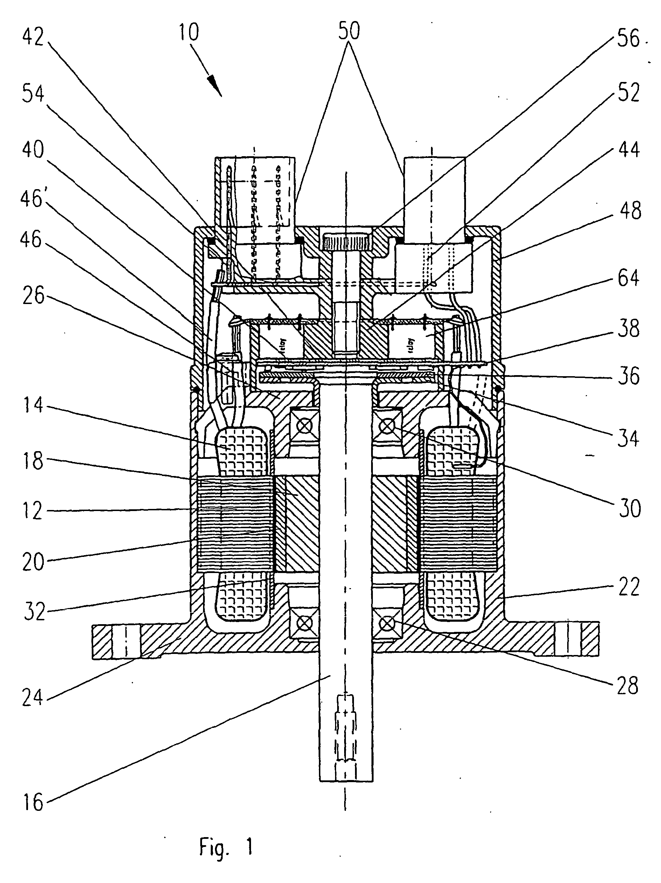

Fig. 1 zeigt eine Schnittdarstellung eines elektronisch kommutierten Gleichstrommotors gemäß der Erfindung, der insbesondere im Automobilbereich und dort beispielsweise für Lenksysteme eingesetzt werden kann. Der Gleichstrommotor, der allgemein mit 10 bezeichnet ist, weist einen Stator mit einem Statorblechpaket 12 und Statorwicklungen 14 auf. Innerhalb des Stators ist ein Rotor mit einer Rotorwelle 16, einem Eisenrückschlußring 18, der auf der Rotorwelle 16 sitzt, und einem Permanentmagneten 20, welcher segmentiert oder als Ring ausgebildet ist, angeordnet.

Stator und Rotor sind von einem Gehäuse 22 umschlossen, das an einer Stirnseite durch einen Montageflansch 24 und an der gegenüberliegenden Stirnseite durch einen Flansch 26 abgeschlossen ist, wobei auf der Seite des Montageflansches 24 die Rotorwelle 16 herausgeführt ist und auf der Seite des Flansches 26 Signalleitungen 52 und Wicklungsanschlüsse 46, 46' des Motors liegen.

Die Rotorwelle 16 ist in den Flanschen 24 und 26 über Lager 28 und 30, z.B. Wälz- oder Gleitlager, insbesondere Kugellager, drehbar gelagert und gehalten.

Bei der gezeigten Ausführungsform kann konzentrisch zwischen der Statorbaugruppe 22, 12 und der Rotorbaugruppe 16, 18, 20 eine feststehende Hülse 32 vorgesehen sein, die den Rotor umschließt und das Eindringen von Fremdkörpern in die Rotorbaugruppe verhindert.

Ein Gleichstrommotor, der eine ähnliche Bauweise wie der Gleichstrommotor der Fig. 1 aufweist, ist mit weiteren Einzelheiten in den deutschen Patentanmeldungen 100 34 302.3 und 100 51 403.0 beschrieben, auf die Bezug genommen wird. Es sei betont, daß die erfindungsgemäße Relaisträgervorrichtung auch in Verbindung mit jeder anderen bekannten oder noch zu entwickelnden Art eines Gleichstrommotors sowie in Generatoren eingesetzt werden kann. Die in Fig. 1 dargestellte Ausführungsform soll lediglich als Beispiel dienen.

Auf der Rotorwelle 16 des in Fig. 1 gezeigten Gleichstrommotors ist eine Haltevorrichtung 34 montiert, auf ein Magnetring 36 aufgebracht ist. Der Haltevorrichtung 34 und dem Magnetring 36 gegenüberliegend und parallel zu diesen ist eine Sensorplatine 38 angeordnet, auf deren dem Magnetring 36 zugewandten Seiten Spulen 40 und Hall-Elemente oder andere Sensorbauteile sitzen. Auf der von dem Magnetring 36 abgewandten Rückseite der Sensorplatine 38 befindet sich eine Eisenrückschlußkomponente 42. Die Anordnung der Sensorplatine ist unten mit weiteren Einzelheiten näher beschrieben.

Wie aus Fig. 1 ersichtlich, drehen sich die Haltevorrichtung 34 und der darauf angeordnete Ringmagnet 36 zusammen mit der Rotorwelle 16, während die Sensorplatine 38 mit den darauf angeordneten Spulen 40, Hall-Elementen etc. feststehend ist, so daß bei Drehung der Rotorwelle 16 in folge der Relativbewegung zwischen dem Ringmagneten 36 und der Sensorplatine 38 drehstellungsbezogene Signale in den Spulen 40, Hall-Elementen oder anderen Sensorelementen entstehen. Der Fachmann wird ohne weiteres erkennen, daß es für die Funktionsweise der Sensorik entscheidend ist, daß die Sensorplatine relativ zu der Haltevorrichtung 34 und den darauf angeordneten Ringmagneten präzise positioniert ist. Bei einer anderen Ausführungsform der Erfindung kann die Sensorplatine 38 auch unmittelbar mit dem Pernanentmagneten 20 zusammenwirken, um drehstellungsbezogene Signale zu erzeugen.

Wie Fig. 1 zeigt, ist die Sensorplatine 38 an der dem Elektromotor zugewandten Innenseite eines Trägerbauteils 44 einer Relaisträgervorrichtung angebracht. In dem Trägerbauteil 44 der Relaisträgervorrichtung sind Relais 64 montiert, welche mit Wicklungsenden 46 der Statorwicklungen 14 verbunden sind, wie unten mit weiteren Einzelheiten beschrieben ist.

Der in Fig. 1 gezeigte Gleichstrommotor wird durch einen Gehäusedeckel 48 abgeschlossen, der integrierte Buchsen/Steckerbauteile 50 aufweist, die mit den Signalleitungen 42 bzw. den Wicklungsenden 46' der Statorwicklungen 14 über eine Anschlußvorrichtung 54 verbunden sind.

Der Gehäusedeckel 48 wird über eine Zentrumsschraube 56, geeignete Schnappverbindungen und/oder Verkleben am Relaisträger 44 in seiner Position gehalten.

Wie erläutert, kann die erfindungsgemäße Relaisträgervorrichtung auch mit anderen Arten von Gleichstrommotoren oder Generatoren eingesetzt werden, wobei insbesondere die Gestaltung des Gehäuses 22 und des Gehäusedeckels 24, die Anordnung und Führung der verschiedenen elektronischen Komponenten innerhalb des Gehäusedeckels 48 sowie die Gestaltung des Rotors und des Stators auf jede denkbare und bekannte Weise ausgeführt sein kann.

Wie in Fig. 1 gezeigt, ist die Relaisträgervorrichtung am Stimende der Rotor-Stator-Einheit angeordnet und hält die Relais 64 sowie die Sensorplatine 38 relativ zu dem Stator in ihrer Position, wobei die Wicklungsenden 46 der Statorwicklungen sowie die Signalleitungen 52 mit den in der Relaisträgervorrichtung gehaltenen Komponenten verbunden sind.

Die erfindungsgemäße Relaisträgervorrichtung dient, wie oben erläutert, zur lagegenauen Positionierung und Halterung der Schaltrelais 64 und der Sensorplatine 38. Die Sensorelektronik hat die Funktion, den optimalen Schaltzeitpunkt für die Statorwicklungen 14 für den Rechts- und Linkslauf des Gleichstrommotors einzustellen. Bei der bevorzugten Ausführungsfonn der Erfindung, die einen dreiphasigen, elektronisch kommutierten Gleichstrommotor betrifft, trennt sie gezielt den Sternpunkt des Motors auf, um die Statorwicklung nach Bedarf zu schalten und zu unterbrechen. Die Relais 64 dienen zum Stromlosschalten der Wicklungen im Störfall.

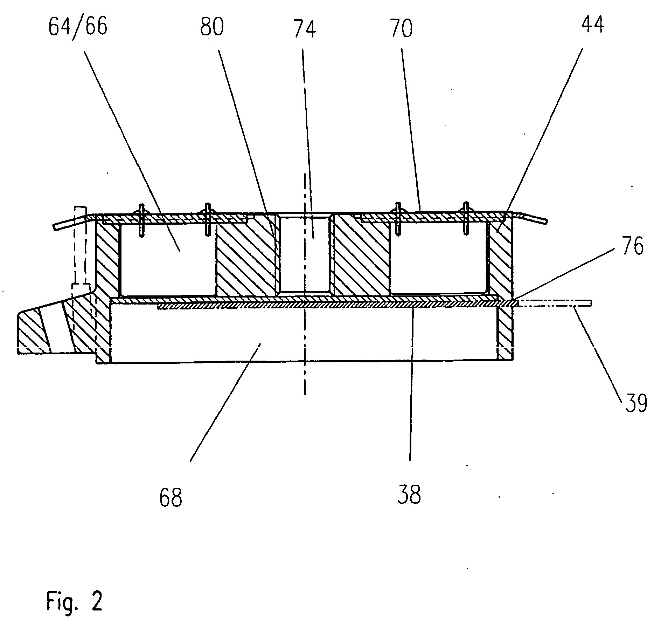

Eine Ausführungsform der erfindungsgemäßen Trägervorrichtung 60 ist in Fig. 2 in vergrößertem Maßstab dargestellt. Sie umfaßt ein Trägerbauteil 44, das vorzugsweise aus einem hochtemperaturfesten Kunststoff gespritzt ist und mehrere exzentrisch angeordnete Kammern 66, bei der bevorzugten Ausführungsform sechs Kammern, zur lagerichtigen Positionierung und vibrationsfesten Halterung der Relais 64 aufweist.

Die Trägervorrichtung 60 weist bei einer bevorzugten Ausführungsform eine zentrale Bohrung 74 mit einem Innengewinde 80 auf, so daß sie beispielsweise mittels der in Fig. 1 gezeigten Zentrumsschraube 56 befestigt werden kann. Auch andere Arten der Befestigung der Trägervorrichtung, z. B. durch direktes Verschrauben, Kleben oder dergleichen, liegen im Bereich der Erfindung.

In dem Trägerbauteil 44 ist ein Hohlraum 68 ausgespart, der zum Aufnehmen der Sensorplatine 38 dient, wobei die Platine 38 in dem Hohlraum 68 vergossen werden kann, um sie gegen das Eindringen von Fremdkörpern, Feuchtigkeit oder dergleichen zu schützen. Auf der Sensorplatine 38 sind (Fig. 1; in Fig. 2 nicht gezeigt) Sensorbauteile, wie Meßspulen, Hall-Sensoren oder dergleichen angeordnet, welche mit dem Ringmagneten 36 auf dem sich mit der Rotorwelle 16 drehenden Trägerbauteil 34 zusammenwirken, um ein drehstellungsbezogene Signale zu erzeugen. Auf der Rückseite der Sensorplatine 38 kann ein Eisenrückschlußelement 42 vorgesehen sein. Die Sensorplatine und ihre Funktion sind mit weiteren Einzelheiten in der parallelen Patentanmeldung "Vorrichtung zur Erzeugung eines drehzahlabhängigen Signals für einen Elektromotor, insbesondere für einen elektronisch kommutierten Gleichstrommotor" derselben Anmelderin mit demselben Anmeldetag beschrieben, auf die Bezug genommen wird.

Bei dem Zusammenbau der Relaisträgervorrichtung mit der Sensorplatine 38 wird zunächst das Eisenrückschlußelement 42 in den Hohlraum 68 eingelegt. Danach wird die Sensorplatine 38, mit den elektronischen Baugruppen darauf (die beispielsweise in PCB-, SMD- oder MID-Technik ausgeführt sein können.) in den Hohlraum 68 eingeführt, wobei bei der gezeigten Ausführungsform die Sensorplatine 38 eine Verlängerung 39 zum Anschließen der Signalleitungen 52 aufweist und in dem Trägerbauteil 44 ein Schlitz 76 zur lagerichtigen Positionierung der Sensorplatine 38 vorgesehen ist. Das Eisenrückschlußelement 42 kann auch auf der Sensorplatine 38 vorinstalliert werden.

Das Leiterbahnbild der Sensorplatine 38 zum Anschließen der entsprechenden Bauelemente kann bei einer abgewandelten Ausführungsform auch unmittelbar auf ein Eisenrückschlußelement aufgebracht werden, auf das vorher eine flächige Isolationsschicht aufgetragen wurde. Bei noch einer anderen Ausführungsform kann die Sensorplatine aus einem Substrat hergestellt sein, in das ein Eisenrückschlußelement integriert ist.

Auf der dem Elektromotor abgewandten Außenseite des Trägerbauteils 44 der Relaisträgervorrichtung 60, welche der Sensorplatine 38 gegenüberliegt, ist ein Stanzgitter 70 in das Trägerbauteil 44 eingefügt.

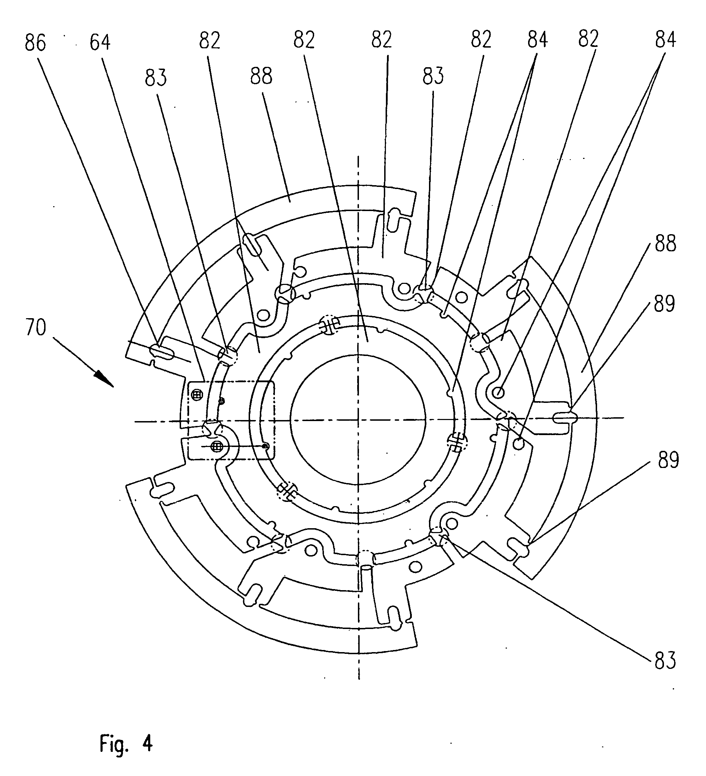

Das Stanzgitter 70 ist gemäß einer bevorzugten Ausführungsform der Erfindung als Stanzblechteil hergestellt, wie am besten aus Fig. 4 erkennbar ist. Das Stanzgitter 70 weist Leiterbahnabschnitte 82 auf, welche über Verbindungsstege 83 zusammen gehalten sind. An den Leiterbahnabschnitten sind Bohrungen 84 zum Anschließen der Relais 64 und anderer elektronischer Bauteile für die Ansteuerung des Motors sowie Kontaktschlitze 86 zum Anschließen der Wicklungsenden 46' der Statorwicklungen 14 vorgesehen. An seinem Außenumfang weist das Stanzgitter 70 einen Ring oder Ringabschnitte 88 auf, welche über Stege 89 mit Leiterbahnabschnitten 82 verbunden sind. Der Ring bzw. die Ringabschnitte 88 dienen als Montagehilfe, welche später in einem Stanzvorgang entfernt werden kann.

Das Stanzgitter 70 kann mit dem Trägerbauteil 44 auf verschiedene Weise verbunden werden.

Bei einer ersten Ausführungsform der Erfindung wird zunächst das einteilige, zusammenhängende Stanzgitter 70 hergestellt, in dem die einzelnen Leiterbahnabschnitte 82 über die Verbindungsstege 83 miteinander verbunden sind. Das Stanzgitter 70 ist von einem Ring oder Ringabschnitten 88 umgeben, die über weitere Stege 89 mit den Leiterbahnabschnitten 82 verbunden sind und als Montagehilfe dienen.

Das Stanzgitter 70 wird in eine Spritzgußform eingelegt und durch Umspritzen zumindest teilweise in Kunststoff eingebettet. Beim Spritzvorgang bleiben die Anschlüsse im Bereich der Bohrungen 84 und Kontaktschlitze 86 frei, wobei insgesamt ein flächiges Metall-Kunststoffverbundteil entsteht.

Anschließend werden die Verbindungsstege 83 zwischen den einzelnen Leiterbahnabschnitten 82, vorzugsweise durch ein Stanzvorgang, entfernt, so daß ein gewünschtes Leiterbahnlayout zurückbleibt. Die Festigkeit und der Zusammenhalt des gesamten Metall-Kunststoffverbundteiles wird durch den Kunststoff, in den das Stanzgitter 70 eingebettet ist, gewährleistet.

Auch das eigentliche Trägerbauteil 44 wird durch Spritzgießen mit seinen Kammern 66 für die Relais 64 und dem Hohlraum 68 für die Sensorplatine 38 hergestellt.

Die Relaisträgervorrichtung wird dann in einem Endmontagevorgang komplettiert, indem die Relais 64 in die Kammern 66 des Trägerbauteils 44 eingelegt werden und das in den Kunststoff eingebettete Stanzgitter 70, mit den freigestanzten Leiterbahnabschnitten 82, auf das Trägerbauteil 44 aufgebracht wird. Die Montagehilfe 88 wird vorzugsweise vor dem Zusammenbringen des Stanzgitters 70 und des Trägerbauteils 44 entfernt. Anschließend werden die elektrischen Verbindungen zwischen den Relaisanschlüssen und den entsprechenden Leiterbahnabschnitten 82 durch Löten, Schweißen oder dergleichen hergestellt; das Eisenrückschlußelement 42 und die bestückte Sensorplatine 38 werden in dem Trägerbauteil 44 montiert.

Bei einer weiteren Ausführungsform des erfindungsgemäßen Trägerbauteils wird das Stanzgitter 70 auf gleiche Weise wie bei der ersten beschriebenen Ausführungsform und wie in Figur 4 gezeigt hergestellt. Dieses Stanzgitter 70 wird in eine Spritzgußform für das Trägerbauteil 44 eingelegt und mit Kunststoff umspritzt, wobei das Stanzgitter 70 dadurch zumindest teilweise in den Kunststoff eingebettet wird. Bei dem Spritzvorgang werden somit gleichzeitig das Stanzgitter 70 mit dem Trägerbauteil 44 verbunden und die Kammern 66 und der Hohlraum 68 des Trägerbauteils 44 ausgeformt. Anschließend werden wie bei der ersten Ausführungsform die Verbindungsstege 83 und 89 entfernt, so daß die Leiterbahnabschnitte 82 mit dem gewünschten Leiterbahnlayout zurückbleiben. Auch die anschließende Komplettierung der Relaisträgervorrichtung 44 mit Relais 64, Eisenrückschlußelement 42 und Sensorplatine 38 erfolgt dann wie bei der ersten Ausführungsform.

Bei einer nochmals abgewandelten Ausführungsvariante der erfindungsgemäßen Relaisträgervorrichtung wird das Stanzgitter 70 mit Kunststoff umspritzt, um ein Metall-Kunststoffverbundteil wie bei der ersten Ausführungsform herzustellen. Vor der Verbindung des umspritzten Stanzgitters 70 mit dem Trägerbauteil 44 wird das Stanzgitter 70 jedoch zunächst mit den Relais 64 bestückt. Die Relais werden mit den entsprechenden Leiterbahnabschnitten 82 elektrisch verbunden, z.B. mittels Löten, Schweißen oder dergleichen, und das mit den Relais 64 bestückte Stanzgitter 70 (d.h. das bestückte Metall-Kunststoffverbundteil) wird an dem Trägerbauteil 44 montiert. Das Eisenrückschlußelement 42 und die bestückte Sensorplatine 38 werden wie bei der ersten und der zweiten Ausführungsform montiert.

Bei schließlich noch einer weiteren, vierten Ausführungsform des erfindungsgemäßen Trägerbauteils ist die Stirnfläche des Trägerbauteils 44 mit einer an die Gestalt des Stanzgitters 70 angepaßten Struktur versehen, so daß das Stanzgitter 70 paßgenau in die Stirnfläche des Trägerbauteils 44 eingelegt werden kann. Hierzu wird das Stanzgitter 70 mit den Leiterbahnabschnitten 82, den Verbindungsstege 83 und der Montagehilfe 88, wie in Figur 4 gezeigt, hergestellt, jedoch nicht mit Kunststoff umspritzt. Das Trägerbauteil 44 wird durch Spritzgießen mit dem gewünschten Profil hergestellt. Das Stanzgitter 70 wird in der strukturierten Stirnfläche des Trägerbauteils 44 formschlüssig gehalten, wobei hierfür beispielsweise mittels Ultraschall eingeformte Zapfen, Stege oder dergleichen vorgesehen sein können. Nach dem Verbinden des Stanzgitters 70 mit dem Trägerbauteil 44 werden die Verbindungsstege 83 und 89 entfernt, die Relais 64 montiert, die elektrischen Verbindungen hergestellt und das Eisenrückschlußelement 42 sowie die bestückte Sensorplatine 38, wie bei den vorhergehenden Ausführungsformen, montiert. Zusätzlich zu der formschlüssigen Verbindung von Stanzgitter 70 und Trägerbauteil 44 kann das Stanzgitter 70 auch mit dem Trägerbauteil 44 verklebt werden.

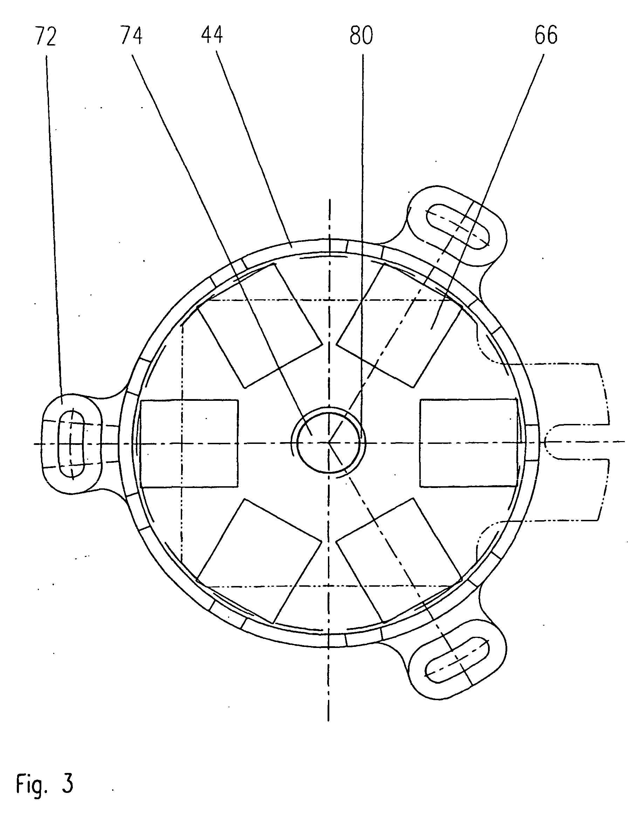

Fig. 3 zeigt eine Draufsicht auf eine Ausführungsform des Trägerbauteils 44 der erfindungsgemäßen Relaisträgervorrichtung, bei der sechs Kammern 66 zur Aufnahme von Relais exzentrisch, gleichmäßig auf dem Umfang des Trägerbauteils 44 verteilt angeordnet sind. Diese Anordnung der Kammern 66 für die Relais eignet sich insbesondere zur Ansteuerung eines elektronisch kommutierten dreiphasigen Gleichstrommotors, wie er in Fig. 1 gezeigt ist. Die Relais werden insbesondere im Sternpunkt eines solchen Motors zur gezielten Ansteuerung und Unterbrechung der Motorphasen angeordnet, so daß bei Störungen die Motorströme unterbrochen werden und der Motor kein Drehmoment erzeugt.

Der Fachmann kann jede andere geeignete Anzahl von Relaiskammern abhängig von der beabsichtigten Anwendung und Ausführungsform des Elektromotors oder Generators konzipieren. Das Trägerbauteil kann zusätzlich weitere Bauelemente der Ansteuerschaltung des Elektromotors, wie Dioden, aufnehmen.

Ebenfalls in Fig. 3 zu erkennen sind drei Laschen 72, welche am Umfang des Trägerbauteils 44 vorgesehen sind, um dieses mit dem Elektromotor, beispielsweise mittels Schrauben zu verbinden, wie in den Figuren 1 und 2 zu erkennen ist. Zusätzlich kann die Relaisträgervorrichtung 60 über die in Figur 1 gezeigte Zentrumsschraube 56, das Innengewinde 80 oder auf jede andere geeignete Weise an dem Motor bzw. dem Motorgehäuse befestigt werden.

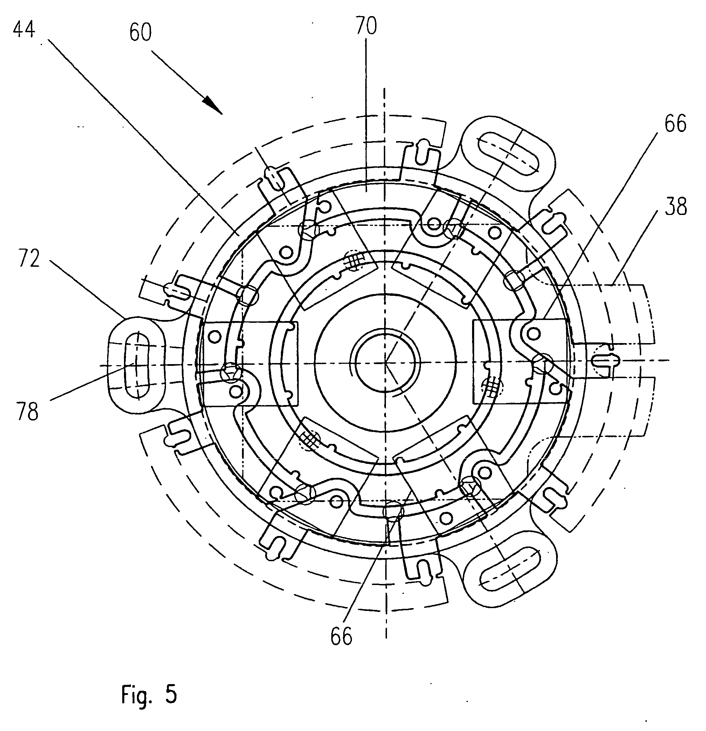

Fig. 5 zeigt in Draufsicht eine weitere Ausführungsform der erfindungsgemäßen Relaisträgervorrichtung 60, wobei in Fig. 4 sowohl das in das Trägerbauteil 44 eingelegte Stanzgitter 70 als auch die Sensorplatine 38 (strichpunktiert) und die Relais 64 zu erkennen sind. In den von dem Trägerbauteil 44 nach außen abstehenden Laschen 72 ist jeweils ein Langloch 78 ausgebildet, das es ermöglicht, die Relaisträgervorrichtung 60 bei der Verbindung mit dem Elektromotor drehbar zu justieren, um eine ideale Ausrichtung der Relais und der Sensorik zu der Rotor-Stator-Baugruppe des Motors zu erreichen.

Die erfindungsgemäße Relaisträgervorrichtung ermöglicht die Schaffung einer vollautomatisch herstellbaren und vormontierbaren Baugruppe, welche die Sensorschaltung, die kleine Signalströme führt, mit der Versorgungs- und Ansteuerschaltung des Elektromotors, in der sehr große Lastströme auftreten können, kombiniert. Die Herstellung dieser Baugruppe ist äußerst kostengünstig, unter anderem weil als Stanzgitter für die Relais und weiteren Bauelemente der Ansteuerschaltung ein eingespritztes Stanzgitter verwendet werden kann und die Baugruppe in einem automatisierten Montage- und Lötprozeß herstellbar ist. Durch die Möglichkeit der Automatisierung erhöht sich auch die Funktionssicherheit der gesamten Baugruppe.

Mit der erfindungsgemäßen Relaisträgervorrichtung wird ferner eine hochgenaue Positionierung und Justierung der Sensorbauteile zu den korrespondierenden Komponenten des Motors möglich, und zwar hinsichtlich der Winkellage und minimaler axialer Toleranzen. Sämtliche Sensorbauteile sowie die Ansteuerelektronik können in der Relaisträgervorrichtung vormontiert werden und sind nach Abschluß der Montage und Justierung der Relaisträgervorrichtung auf dem Motor richtig positioniert. Insbesondere das Vorsehen der Langlöcher 74 in den Laschen 72 ermöglicht eine Feinjustierung der Relaisträgervorrichtung auf dem Motor. Die genaue Positionierung in axialer und radialer Richtung der Sensorplatine zu den rotierenden Magneten ist entscheidend, um reproduzierbare drehzahlabhängige Signale zu erzeugen. Die axiale Ausrichtung hat insbesondere Bedeutung für den Arbeitsluftspalt zwischen den Hall-Elementen und Spulen auf der Platine und den sich drehenden Magneten. Die Anordnung und Verschaltung der exzentrisch angeordneten Relais zu den Wicklungsenden der Statorwicklungen ist im Hinblick auf symmetrische Widerstände innerhalb der verschiedenen Phasen der Motorwicklungen und enge Widerstandstoleranzen von Bedeutung. Durch die erfindungsgemäße Relaisträgervorrichtung wird eine kompakte Baugruppe geschaffen, die diesen Anforderungen genügt.

Durch Ausgießen des Trägerbauteils 44 der Relaisträgervorrichtung 60 und insbesondere des Hohlraums für die Sensorplatine ergibt sich eine besonders robuste, partikelsichere Baugruppe, die vibrationsbeständig ist.

## Patentansprüche

1. Trägervorrichtung für einen Elektromotor (10) zur Anordnung einer Mehrzahl von Relais (64) an einer Stirnseite des Elektromotors, an welcher Wicklungsanschlüsse (46) und Signalleitungen (52) des Elektromotors vorgesehen sind, mit
einem Trägerbauteil (44), das so gestaltet ist, daß es sich über die Stirnseite des Elektromotors erstreckt und wenigstens eine Kammer (66) zum Aufnehmen und Positionieren der Relais (64) aufweist,
einem Anschlußbauteil (70) zum elektrischen Anschließen der Wicklungsanschlüsse (46) und der Relais (64), das in das Trägerbauteil (44) integriert ist, und
einer Sensorplatine (38), die mit dem Trägerbauteil (44) verbunden ist und an welche die Signalleitungen (52) des Elektromotors anschließbar sind.

2. Trägervorrichtung nach Anspruch 1, **dadurch gekennzeichnet, daß** das Trägerbauteil (44) aus einem hochtemperaturfesten Kunststoff hergestellt ist.

3. Trägervorrichtung nach Anspruch 1 oder 2, **dadurch gekennzeichnet, daß** das Trägerbauteil (44) mittels Spritzgießen aus Kunststoff hergestellt ist und das Anschlußbauteil (70) von Kunststoff umspritzt ist.

4. Trägervorrichtung nach Anspruch 1, 2 oder 3, **dadurch gekennzeichnet, daß** das Anschlußbauteil (70) aus Blech hergestellt ist.

5. Trägervorrichtung nach Anspruch 4, **dadurch gekennzeichnet, daß** das Anschlußbauteil (70) in Form eines Stanz-Blechteils, insbesondere als Stanzgitter, hergestellt ist.

6. Trägervorrichtung nach einem der vorangehenden Ansprüche, **dadurch gekennzeichnet, daß** das Trägerbauteil (44) und das Anschlußbauteil (70) zentrisch zu einer Rotorwelle (16) des Elektromotors (10) anbringbar sind.

7. Trägervorrichtung nach Anspruch 6, **dadurch gekennzeichnet, daß** der Anschlußbauteil (70) an einer von dem Elektromotor (10) abgewandten Außenseite des Trägerbauteils (44) angeordnet und die Sensorplatine (38) an einer Innenseite des Trägerbauteils (44) angeordnet ist

8. Trägervorrichtung nach Anspruch 6 oder 7, **dadurch gekennzeichnet, daß** die Sensorplatine (38) mit dem Trägerbauteil (44) vergossen ist.

9. Trägervorrichtung nach Anspruch 6, 7 oder 8, **dadurch gekennzeichnet, daß** das Trägerbauteil (44) einen dicht abgeschlossenen Raum (66) zur Aufnahme der Sensorplatine (38) vorsieht.

10. Trägervorrichtung nach einem der vorangehenden Ansprüche, **dadurch gekennzeichnet, daß** das Trägerbauteil (44) an der Stirnseite des Elektromotors drehbar justierbar anbringbar ist.

11. Trägervorrichtung Anspruch 10, **dadurch gekennzeichnet, daß** das Trägerbauteil (44) von seinem Umfang abstehende Laschen (72) zum Befestigen des Trägerbauteils (44) an der Stirnseite des Elektromotors aufweist.

12. Trägervorrichtung nach Anspruch 11, **dadurch gekennzeichnet, daß** in den Laschen (72) Langlöcher (78) ausgebildet sind.

13. Trägervorrichtung nach einem der vorangehenden Ansprüche, **dadurch gekennzeichnet, daß** in dem Trägerbauteil (44) Relais (64) montiert sind.

14. Trägervorrichtung nach einem der vorangehenden Ansprüche, **dadurch gekennzeichnet, daß** in dem Trägerbauteil (44) zwei bis neun Kammern (66) und insbesondere drei oder sechs Kammern (66) zum Aufnehmen von Relais (64) vorgesehen sind.

15. Trägervorrichtung nach einem der vorangehenden Ansprüche, **dadurch gekennzeichnet, daß** das Trägerbauteil (44) Vertiefungen zur Positionierung und seitlichen Isolierung des Anschlußbauteils (70) aufweist.

16. Elektromotor, insbesondere Gleichstrommotor mit einer Relaisträgervorrichtung (60) nach einem der vorangehenden Ansprüche.

## Claims

1. A supporting unit for an electric motor (10) for arranging a number of relays (64) at the end face of an electric motor at which winding connections (46) and signal lines (52) of the electric motor are provided comprising:
a supporting component (44), which is designed in such a way that it extends over the end face of the electric motor and includes at least one chamber (66) to accommodate and position the relays (64),
a connecting component (70) for electrically connecting the winding connections (46) and the relays (64) which is integrated into the supporting component (44), and
a sensor PCB (38) which is connected to the supporting component (44) and to which the signal lines (52) of the electric motor can be connected.

2. A supporting unit according to Claim 1, **characterized in that** the supporting component (44) is made of a high temperature resistant plastic.

3. A supporting unit according to Claims 1 or 2, **characterized in that** the supporting component (44) is made of plastic by means of injection molding and that plastic is injected around the connecting component (70).

4. A supporting unit according to Claims 1, 2 or 3, **characterized in that** the connecting component (70) is made of sheet metal.

5. A supporting unit according to Claim 4, **characterized in that** the connecting component (70) is made in the form of a stamped sheet metal piece, particularly a lead frame.

6. A supporting unit according to one of the above claims, **characterized in that** the supporting component (44) and the connecting component (70) can be mounted centrally to a shaft (16) of the electric motor (10).

7. A supporting unit according to Claim 6, **characterized in that** the connecting component (70) is placed on an outer surface of the supporting component (44) facing away from the electric motor (10) and the sensor PCB (38) is placed on an inner surface of the supporting component (44).

8. A supporting unit according to Claims 6 or 7, **characterized in that** the sensor PCB (38) is encapsulated in the supporting component (44).

9. A supporting unit according to Claims 6, 7 or 8, **characterized in that** the supporting component (44) provides a tightly sealed space (66) to accommodate the sensor PCB (38).

10. A supporting unit according to one of the above claims, **characterized in that** the supporting component (44) can be fixed at the end of the electric motor so that it can be turned and adjusted.

11. A supporting unit according to Claim 10, **characterized in that** the supporting component (44) includes mounting tabs (72) protruding from its circumference in order to attach the supporting component (44) at the end of the electric motor.

12. A supporting unit according to Claim 11, **characterized in that** elongated holes (78) are formed in the mounting tabs (72).

13. A supporting unit according to one of the above claims, **characterized in that** relays (64) are mounted in the supporting component (44).

14. A supporting unit according to one of the above claims, **characterized in that** two to nine chambers (66) and in particular three or six chambers (66) are provided in the supporting component (44) to accommodate the relays (64).

15. A supporting unit according to one of the above claims, **characterized in that** the supporting component (44) includes depressions to position the connecting component (70) and insulate it on its sides.

16. An electric motor, in particular a DC motor with a relay supporting unit (60), according to one of the preceding claims.

## Revendications

1. Dispositif de support pour un moteur électrique (10) destiné à la disposition d'une pluralité de relais (64) sur un côté frontal du moteur électrique, sur lequel des raccords d'enroulement (46) et des lignes de signalisation (52) du moteur électrique sont prévus, pourvu d'un élément de support (44) conçu de manière à s'étendre sur le côté frontal du moteur électrique et comportant au moins une chambre (66) destinée à recevoir et à positionner les relais (64), d'un élément de raccord (70) pour le raccordement électrique des raccords d'enroulement (46) et des relais (64) intégré dans l'élément de support (44) et d'une carte imprimée pour capteurs (38) reliée à l'élément de support (44) et à laquelle les lignes de signalisation (52) du moteur électrique peuvent être raccordées.

2. Dispositif de support selon la revendication 1, **caractérisé en ce que** l'élément de support (44) est fabriqué en un plastique résistant aux températures élevées.

3. Dispositif de support selon la revendication 1 ou 2, **caractérisé en ce que** l'élément de support (44) est fabriqué en plastique par moulage par injection et **en ce que** l'élément de raccord (70) est entouré par injection de plastique.

4. Dispositif de support selon la revendication 1, 2 ou 3, **caractérisé en ce que** l'élément de raccord (70) est fabriqué en tôle.

5. Dispositif de support selon la revendication 4, **caractérisé en ce que** l'élément de raccord (70) est fabriqué sous la forme d'une pièce en tôle estampée, en particulier sous la forme d'une grille estampée.

6. Dispositif de support selon l'une quelconque des revendications précédentes, **caractérisé en ce que** l'élément de support (44) et l'élément de raccord (70) peuvent être disposés de manière centrale par rapport à l'arbre du rotor (16) du moteur électrique (10).

7. Dispositif de support selon la revendication 6, **caractérisé en ce que** l'élément de raccord (70) est disposé sur un côté externe opposé au moteur électrique (10) de l'élément de support (44) et **en ce que** la carte imprimée pour capteurs (38) est disposée sur un côté interne de l'élément de support (44).

8. Dispositif de support selon la revendication 6 ou 7, **caractérisé en ce que** la carte imprimée pour capteurs (38) est soudée à l'élément de support (44).

9. Dispositif de support selon la revendication 6, 7 ou 8, **caractérisé en ce que** l'élément de support (44) présente un espace (66) fermé de manière étanche destiné à recevoir la carte imprimée pour capteur (38).

10. Dispositif de support selon l'une quelconque des revendications précédentes, **caractérisé en ce que** l'élément de support (44) peut être installé de manière à pouvoir tourner et s'aligner sur le côté frontal du moteur électrique.

11. Dispositif de support selon la revendication 10, **caractérisé en ce que** l'élément de support (44) comporte des pattes (72) distantes de sa périphérie destinées à la fixation de l'élément de support (44) sur le côté frontal du moteur électrique.

12. Dispositif de support selon la revendication 11, **caractérisé en ce que** des orifices longitudinaux (78) sont conçus dans les pattes (72).

13. Dispositif de support selon l'une quelconque des revendications précédentes, **caractérisé en ce que** des relais (64) sont montés dans l'élément de support (44).

14. Dispositif de support selon l'une quelconque des revendications précédentes, **caractérisé en ce que** deux à neuf chambres (66) et en particulier trois ou six chambres (66) destinées à recevoir les relais (64) sont prévues dans l'élément de support (44).

15. Dispositif de support selon l'une quelconque des revendications précédentes, **caractérisé en ce que** l'élément de support (44) comporte des excavations pour le positionnement et l'isolement latéral de l'élément de raccord (70).

16. Moteur électrique, en particulier moteur à courant continu pourvu d'un dispositif de support de relais (60) selon l'une quelconque des revendications précédentes.
